# EUROPÄISCHE PATENTSCHRIFT

(11) **EP 1 844 390 B1**
(45) Veröffentlichungstag und Bekanntmachung des Hinweises auf die Patenterteilung: **04.07.2012**
(21) Anmeldenummer: 06701696.4
(22) Anmeldetag: 31.01.2006
(51) Int. Cl.: G06F 3/12

(54) **VERFAHREN UND ANORDNUNG ZUM DRUCKEN ÜBER ANWENDUNGSSERVER SOWIE EIN ENTSPRECHENDES COMPUTERPROGRAMM UND EIN ENTSPRECHENDES COMPUTERLESBARES SPEICHERMEDIUM**
METHOD AND SYSTEM FOR PRINTING VIA APPLICATION SERVERS AND CORRESPONDING COMPUTER PROGRAM AND CORRESPONDING COMPUTER-READABLE STORAGE MEDIUM
PROCEDE ET DISPOSITIF POUR REALISER UNE IMPRESSION PAR L'INTERMEDIAIRE D'UN SERVEUR D'APPLICATION, PROGRAMME INFORMATIQUE CORRESPONDANT, ET SUPPORT D'ENREGISTREMENT CORRESPONDANT, LISIBLE PAR ORDINATEUR

(30) Priorität: 31.01.2005 DE 102005004507
(43) Veröffentlichungstag der Anmeldung: 17.10.2007
(73) Patentinhaber: Cortado AG, 10559 Berlin (DE)
(72) Erfinder: TRAPPE, Bernd, 15366 Hoppegarten (DE)
(74) Vertreter: Ziebig, Marlene
(86) Internationale Anmeldenummer: PCT/EP2006/000988
(87) Internationale Veröffentlichungsnummer: WO 2006/082086

(56) Entgegenhaltungen:
- EP-A- 1 248 185
- EP-A- 1 276 041
- EP-A- 1 422 609
- US-A1- 2003 210 417

## Beschreibung

Die Erfindung betrifft ein Verfahren und eine Anordnung zum Drucken über Anwendungsserver sowie ein entsprechendes Computerprogramm und ein entsprechendes computerlesbares Speichermedium, welche insbesondere beim Drucken von Unix- und SAP-Servern zu ICA-/RDP-Clients (ICA = Independent Computing Architecture, RDP = Remote Desktop Protocol) nutzbar sind.

In herkömmlichen Systemen, in welchen Anwendungsserver eingesetzt werden, werden von Nutzern ausgelöste Druckaufträge in der Regel auf Netzwerkdrucker geschickt. Dabei sind diese Netzwerkdrucker immer auf dem Anwendungsserver eingerichtet. Es kann sich dabei um einen oder auch eine Liste von eingerichteten Druckern handeln. Aus der Liste kann sich dann ein Nutzer des Anwendungsservers einen für seine Zwecke geeigneten Drucker auswählen.

Ein wesentlicher Nachteil dieser Lösung besteht darin, dass selbst beim Angebot einer Liste von Netzwerkdruckern in bestimmten Situationen für Nutzer, welche auf dem Anwendungsserver arbeiten, ein Ausdruck im Zugriffsbereich des Nutzers nicht möglich ist. Das ist beispielsweise der Fall, wenn die Netzwerkdrucker in der Firma aufgestellt sind, der Nutzer aber von zuhause auf dem Anwendungsserver arbeitet. Dann kann der Nutzer zwar gegebenenfalls einen solchen Netzwerkdrucker anwählen und dort ausdrucken, ein Ausdruck auf dem Arbeitsplatzdrucker zu Hause ist mit den herkömmlichen Lösungen nicht möglich.

In der europäischen Patentanmeldung EP 1 422 609 A2 wird ein Verfahren zum lokalen Drucken von Dokumenten beschrieben, bei dem ein Dokument von einem entfernten Anwendungsserver mit Hilfe eines Proxy-Applet ausgedruckt wird, wobei das Proxy-Applet durch einen auf dem Client laufenden Browser ausgeführt wird. Das Proxy-Applet kommuniziert dabei mit dem Anwendungsserver über eine http-Verbindung.

Die Aufgabe der vorliegenden Erfindung besteht somit darin, ein Verfahren und eine Anordnung zum Drucken über Anwendungsserver sowie ein entsprechendes Computerprogramm und ein entsprechendes computerlesbares Speichermedium bereitzustellen, welche die Möglichkeiten zum Ausdruck bei der Nutzung von Anwendungsservern erweitern.

Diese Aufgabe wird erfindungsgemäß gelöst durch die Merkmale im kennzeichnenden Teil der Ansprüche 1, 8, 11 und 13 im Zusammenwirken mit den Merkmalen im Oberbegriff. Zweckmäßige Ausgestaltungen der Erfindung sind in den Unteransprüchen enthalten.

Ein besonderer Vorteil des erfindungsgemäßen Verfahrens zum Drucken über Anwendungsserver, d.h. zum Drucken beim Arbeiten auf einem Anwendungsserver von einem Client-Terminal aus, besteht darin, dass ein auf dem Anwendungsserver arbeitender Nutzer (user) von den auf dem Anwendungsserver eingerichteten Netzwerkdruckern unabhängig ist, und insbesondere jederzeit der Zugriff auf die von ihm ausgedruckten Dokumente ermöglicht wird. Dies wird erreicht, indem bei dem erfindungsgemäßen Verfahren zum Drucken über Anwendungsserver der Anwendungsserver vermittels mindestens eines Terminalservers von mindestens einem Client-Terminal bedient, und ein von einem Nutzer des mindestens einen Client-Terminals ausgegeben wird. Hierbei wird unter einem Druckauftrag die Menge aller an einen Drucker zu sendenden Daten (Druckdaten) verstanden, die mit demselben Druckbefehl (vorzugsweise aus einer Anwendung heraus) initiiert wurde. Vorzugsweise erfolgt der Ausdruck auf einem auf dem Endgerät (Client-Terminal) des Nutzers eingerichteten Drucker, dem Arbeitsplatzdrucker, vorzugsweise auf dem Standard-Arbeitsplatzdrucker. Der Zugriff auf die ausgedruckten Unterlagen kann so durch entsprechende Wahl des (Standard-)Druckers durch den Nutzer selbst sichergestellt werden. Besonders vorteilhaft ist der Einsatz des erfindungsgemäßen Verfahrens, wenn ein Nutzer beispielsweise von einem firmenexternen Terminal (PC oder dergleichen) aus arbeitet, die auf dem Anwendungsserver eingerichteten (Netzwerk-)Drucker sich jedoch alle in der Firma befinden. Bei den herkömmlichen Lösungen könnte der Nutzer in diesem Falle zwar einen dieser (Netzwerk-)Drucker für den Ausdruck wählen, nicht aber beispielsweise einen auf seinem PC eingerichteten Arbeitsplatzdrucker.

In einer bevorzugten Ausführungsform des erfindungsgemäßen Verfahrens ist es vorgesehen, dass eine Weiterleitung der auf dem Anwendungsserver gestarteten Druckaufträge an das Client-Terminal durch Vermittlung des Terminalservers, auf dem die Session des Nutzers läuft, erfolgt. Um diesen Terminalserver zu ermitteln, werden die für die Kommunikation zwischen Anwendungsserver(n) und Client-Terminals eingesetzten Terminalserver durch eine Fernabfrage abgefragt, durch welche der Terminalserver mit der gesuchten Nutzer-Session bestimmt wird. In der Regel kennt jeder Terminalserver die auf den anderen Terminalservern laufenden Sessions, so dass es genügt, nur einen Terminalserver anzufragen. In dem Fall, dass als Betriebssystem Windows genutzt wird, erfolgt die Fernabfrage vorzugsweise als DCOM-Abfrage (DCOM = Distributed Component Object Model). DCOM definiert die Kommunikation von Objekten in einem Netzwerk. Für die Abfrage der Terminalserver wird in einer bevorzugten Ausführungsform der Nutzername (user name), unter dem der Nutzer auf dem Client-Terminal eingeloggt ist, verwendet. Es können jedoch auch alternativ oder zusätzlich andere nutzerspezifische Daten für die Ermittlung des Terminalservers, auf dem die Session des Nutzers läuft, verwendet werden. Hierfür werden die entsprechenden Daten/Angaben erforderlichenfalls von Client-Terminal oder Terminalserver, auf dem die Session des Nutzers läuft, an das Computerprogramm bzw. Programmmodul, welches die Abfrage durchführt, übermittelt. In einer bevorzugten Ausführungsform werden zusammen mit dem vom Nutzer ausgelösten Druckauftrag Informationen über den auf dem Anwendungsserver eingeloggten Nutzer, beispielsweise der Nutzername, unter dem der Nutzer auf dem Anwendungsserver eingeloggt ist, vom Anwendungsserver an das Computerprogramm bzw. das Programmmodul übermittelt.

Als besonders vorteilhaft erweist es sich, wenn der auf dem Anwendungsserver gestartete Druckauftrag in die Session des Nutzers, in welcher der Druckauftrag ausgelöst wurde, eingebunden wird. Die Einbindung des Druckauftrags erfolgt in einer bevorzugten Ausführungsform dadurch, dass der Druckauftrag zu einem eigens zu diesem Zweck auf dem Terminal-Server installierten Drucker (im Druckordner des Nutzers) kopiert wird. In diesem Falle wird der Druckauftrag auf dem Drucker ausgedruckt, der auf dem Client-Terminal als Standard-Drucker eingerichtet ist.

Eine bevorzugte Ausführungsform sieht vor, dass der Anwendungsserver den Druckauftrag an einen Spool-Server übermittelt und der Spool-Server ihn an einen Terminalserver oder einen dedizierten Druckserver weiterleitet, so dass der auf dem Anwendungsserver gestartete Druckauftrag durch Vermittlung eines Spool-Servers an den ermittelten Terminalserver geleitet wird. In einer bevorzugten Ausführungsform wird der Druckauftrag durch den Spool-Server über das LPR-Protokoll (LPR = Line Printer Remote) an den ermittelten Terminalserver gesendet.

In einer anderen bevorzugten Ausführung der Erfindung ist es vorgesehen, dass eine Übertragung der Druckdaten zumindest von dem Terminalserver, auf dem die Session des Nutzers läuft, an das Client-Terminal bandbreitenkontrolliert, insbesondere bandbreitenbegrenzt, komprimiert und/oder verschlüsselt erfolgt. Dadurch kann verhindert werden, dass durch die Übersendung des Druckauftrages an das Client-Terminal ein großer Teil der dem Nutzer (Client-Terminal) für die Kommunikation mit dem Terminalserver/Anwendungsserver zur Verfügung stehenden Bandbreite durch die Druckdaten beansprucht und somit eine andere Kommunikation des Nutzers über diese Kommunikationsverbindung blockiert wird.

In einer weiteren bevorzugten Ausführung der Erfindung ist vorgesehen, dass eine Übertragung des Druckauftrags zumindest von dem Terminalserver, auf dem die Session des Nutzers läuft, an das Client-Terminal mit dem Protokoll Independent Computing Architecture (ICA-Protokoll) oder dem Remote Desktop Protocol (RDP) erfolgt. Diese Protokolle gestatten es, nutzerspezifisch Daten zu übertragen (im Gegensatz zum TCP/IP-Protokoll, welches nur gerätespezifisch kommunizieren kann). Insbesondere wird durch ICA oder RDP ermöglicht, Daten in die Nutzer-Session einzubinden.

Eine erfindungsgemäße Anordnung zum Drucken über Anwendungsserver umfasst mindestens einen Anwendungsserver, mindestens einen Terminalserver und mindestens ein Client-Terminal, wobei der mindestens eine Anwendungsserver, der mindestens eine Terminalserver und das mindestens eine Client-Terminal durch Mittel zur Datenübertragung miteinander verbunden sind. Die Anordnung ist dabei derart eingerichtet, dass ein von einem Nutzer des mindestens einen Client-Terminals ausgelöster, auf dem Anwendungsserver gestarteter Druckauftrag durch einen auf dem Client-Terminal eingerichteten Arbeitsplatzdrucker ausgedruckt und/oder über eine optische Schnittstelle des Client-Terminals ausgegeben wird. Anstelle des auf dem Client-Terminal eingerichteten Arbeitsplatzdruckers kann erfindungsgemäß auch ein lokal auf dem Client-Terminal eingerichteten Netzwerkdrucker, der beim Einsatz bisher bekannter Verfahren zum Drucken von Anwendungsservern aus nicht genutzt werden konnte, als Gerät zur Ausgabe des Druckauftrags genutzt werden.

Um das erfindungsgemäße Verfahren ausführen zu können, wird die Anordnung vorzugsweise eingerichtet, indem auf mindestens einer Datenverarbeitungseinrichtung der Anordnung ein Computerprogramm installiert wird, das es der mindestens einen Datenverarbeitungseinrichtung ermöglicht, nachdem es in Speichermittel der mindestens einen Datenverarbeitungseinrichtung geladen worden ist, ein Verfahren zum Drucken über Anwendungsserver durchzuführen, wobei ein Anwendungsserver vermittels mindestens eines Terminalservers von mindestens einem Client-Terminal bedient, und ein von einem Nutzer des mindestens einen Client-Terminals ausgelöster, auf dem Anwendungsserver gestarteter Druckauftrag durch einen auf dem Client-Terminal eingerichteten Arbeitsplatzdrucker, auf einem lokal auf dem Client-Terminal eingerichteten Netzwerkdrucker ausgedruckt und/oder über eine optische Schnittstelle des Client-Terminals ausgegeben wird.

Solche Computerprogramme können beispielsweise (gegen Gebühr oder unentgeltlich, frei zugänglich oder passwortgeschützt) downloadbar in einem Daten- oder Kommunikationsnetz bereitgestellt werden. Die so bereitgestellten Computerprogramme können dann durch ein Verfahren nutzbar gemacht werden, bei dem ein Computerprogramm nach einem der Ansprüche 11 oder 12 aus einem elektronischen Datennetz, wie beispielsweise aus dem Internet, auf eine an das Datennetz angeschlossene Datenverarbeitungseinrichtung heruntergeladen wird.

Vorzugsweise ist das erfindungsgemäße Computerprogramm modular aufgebaut. Das hat den Vorteil, dass die einzelnen Module auf verschiedene Datenverarbeitungseinrichtungen der Anordnung verteilt werden können, indem einzelne Programmmodule in Speichermittel der jeweiligen Datenverarbeitungseinrichtung geladen werden. So sehen verschiedene bevorzugte Ausführungsformen der Erfindung vor, dass zumindest ein Modul des Computerprogramms auf einem Anwendungsserver, einem Terminal-Server, einem Client-Terminal, einem Spool-Server und/oder einem dedizierten Druckserver installiert ist. Dabei kann ein auf dem Anwendungs- oder dem dedizierten Druckserver installiertes Programmmodul beispielsweise dafür sorgen, dass die nutzerspezifischen Informationen einem ausgelösten Druckauftrag hinzugefügt werden. Ein auf dem Anwendungs- oder dem dedizierten Druckserver installiertes Programmmodul kann beispielsweise die Fernabfrage der Terminalserver starten.

Eine bevorzugte Ausführungsform der erfindungsgemäßen Anordnung umfasst mindestens einen Spool-Server. Vorzugsweise ist der mindestens eine Spool-Server derart in die Anordnung integriert, dass der mindestens eine Spool-Server in eine durch die Mittel zur Datenübertragung zwischen dem mindestens einen Anwendungsserver und dem mindestens einen Terminal-server gebildete Kommunikationsverbindung eingefügt wird.

Eine bevorzugte Ausführungsform der erfindungsgemäßen Anordnung umfasst mindestens einen dedizierten Druckserver. Ein solcher dedizierter Druckserver kann beispielsweise in die Kommunikationsverbindung zwischen dem mindestens einen Anwendungsserver und dem mindestens einen Terminalserver zwischengeschaltet werden.

Es ist erfindungsgemäß weiter vorgesehen, ein computerlesbares Speichermedium einzusetzen, auf dem ein Programm gespeichert ist, das es einer Datenverarbeitungseinrichtung ermöglicht, nachdem es in Speichermittel der Datenverarbeitungseinrichtung geladen worden ist, ein Verfahren zum Drucken über Anwendungsserver durchzuführen, wobei ein Anwendungsserver vermittels mindestens eines Terminalservers von mindestens einem Client-Terminal bedient, und ein von einem Nutzer des mindestens einen Client-Terminals ausgelöster, auf dem Anwendungsserver gestarteter Druckauftrag durch einen auf dem Client-Terminal eingerichteten Arbeitsplatzdrucker, auf einem lokal auf dem Client-Terminal eingerichteten Netzwerkdrucker ausgedruckt und/oder über eine optische Schnittstelle des Client-Terminals ausgegeben wird. In dem Fall, wenn das erfindungsgemäße Computerprogramm mehrere Programmmodule umfasst, erweist es sich als vorteilhaft, wenn einzelne Programmmodule auf verschiedenen computerlesbaren Speichermedien gespeichert sind.

Die Erfindung soll nachstehend anhand von einem zumindest teilweise in den Figuren dargestellten Ausführungsbeispiel näher erläutert werden. Es zeigen:
- Fig. 1:: eine beispielhafte Anordnung zur Druckunterstützung für Anwendungsserver mit nur einem Standalone-Terminal-Server, auf dem ein Programmodul installiert ist, welches die Übertragung von Druckaufträgen in die Nutzer-Session steuert (Programmmodul A);
- Fig. 2:: eine beispielhafte Anordnung zur Druckunterstützung für Anwendungsserver mit Terminal-Server-Farm, wobei das Programmmodul A lediglich auf einem der Farm-Server installiert ist;
- Fig. 3:: eine beispielhafte Anordnung zur Druckunterstützung für Anwendungsserver mit dediziertem Druckserver, wobei das Programmmodul A auf dem dedizierten Druckserver installiert ist;
- Fig. 4a:: Registerkarte des Konfigurationsmenüs für das Programmmodul A zur Auswahl des Druckers;
- Fig. 4b:: Registerkarte des Konfigurationsmenüs für das Programmmodul A zur Auswahl des Spool-Servers;
- Fig. 4c:: Registerkarte des Konfigurationsmenüs für das Programmmodul A zur Festlegung des Servers für die Session-Abfrage.

Das Verfahren zur Druckunterstützung für Anwendungsserver dient der Druckunterstützung in Client-Server-Architekturen mit Anwendungsservern 1, beispielsweise einem SAP-Server. Installiert werden kann das Verfahren bzw. ein das Verfahren ausführendes Computerprogramm auf Terminal-Servern 4 oder dedizierten Druckservern 3 unter Windows. Ein in einem bevorzugten Ausführungsbeispiel der Erfindung eingesetztes Computerprogramm, im folgenden als Programmmodul A bezeichnet, empfängt Druckaufträge von LPRs (= Line Printer Remote), ermittelt aus dem Druckauftrag den Namen des Nutzers, welcher den Druckauftrag ausgelöst hat, führt eine Anfrage aus, um zu ermitteln, auf welchem Terminal-Server 4 die Session des den Druckauftrag auslösenden Nutzers läuft und schickt den Druckauftrag an den auf dem Terminal-Server 4 eingerichteten Drucker. Dort wird der Druckauftrag in den Druckerordner des Nutzers geschrieben. Beim Empfang des Druckauftrags tritt das Programmmodul A als LPD auf. Bei der Durchführung des erfindungsgemäßen Verfahrens wirkt das Programmmodul A mit einem weiteren Computerprogramm (Programmmodul B) zusammen, welches auf allen Terminal-Servern 4 installiert ist. Das Programmmodul B nimmt die von Programmmodul A gesendeten Druckaufträge in Empfang und leitet sie an das Client-Terminal 6 weiter. Auf dem Client-Terminal 6 empfängt ein drittes Computerprogramm (Programmmodul C) den von Programmmodul B versendeten Druckauftrag und leitet den Druckauftrag an den auf dem Client-Terminal 6 eingerichteten Drucker 7 weiter. Die hier kurz aufgeführten Schritte sollen im folgenden näher erläutert werden. Das Programmmodul A empfängt Druckaufträge von LPRs und leitet diese an Programmmodul B weiter. Dieses wiederum leitet die Druckdaten mit den Merkmalen Bandbreitenkontrolle, insbesondere Bandbreitenbegrenzung, Komprimierung und ggf. Verschlüsselung an das Programmmodul C weiter, wobei entsprechende Netzwerkprotokolle, wie beispielsweise ICA oder RDP, eingesetzt werden, die eine Adressierung des Nutzers erlauben (im Gegensatz beispielsweise zu TCP/IP). Diese Weiterleitung kann ggf. mit Hilfe der Drucker-Queue eines Terminal-Servers 4 erfolgen. Auf der Clientseite, d.h. dem Client-Terminal 6, angekommen, werden die Druckdaten von Programmmodul C dekomprimiert und entschlüsselt und an einen Drucker 7 weitergeleitet - das kann sowohl der Standarddrucker des Client-Betriebssystems als auch ein von Programmmodul C festgelegter Drucker sein.

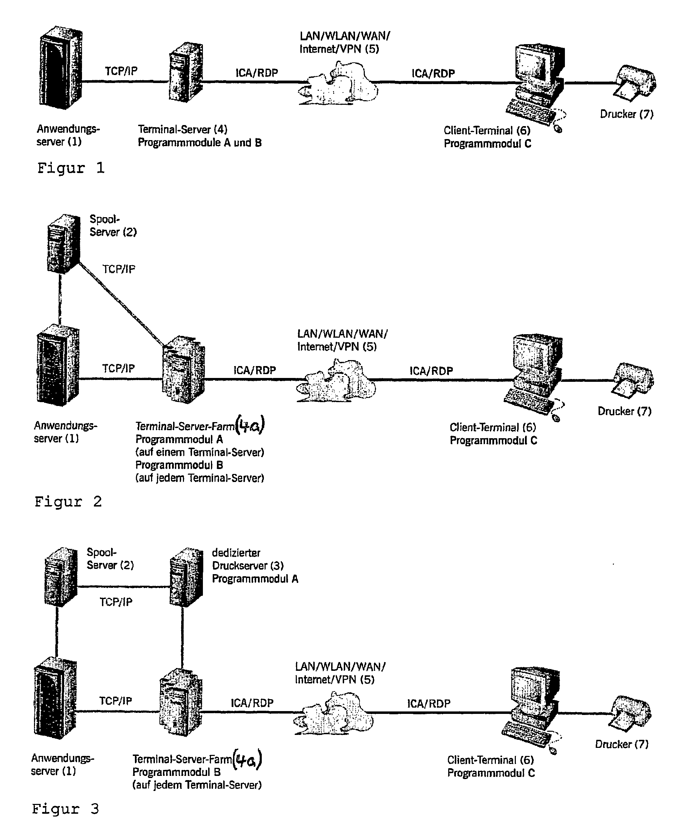

Die Anwender eines SAP-Systems nutzen in der Regel PCs mit 32-bit-Windows als Client-Terminal 6. Mit den auf dem Client-Terminal 6 installierten ICA-Clients stellen sie eine Verbindung zu einem Terminal-Server 4, beispielsweise zu einem MetaFrame-Server, her. Dieser ist mit dem SAP-System verbunden und stellt den ICA-Clients das SAP GUI (= Graphical User Interface) für Windows zur Verfügung. Als Protokoll für die MetaFrame-Sessions dient ICA, das in einer bevorzugten Ausführungsform auch als Druckprotokoll genutzt werden soll (Figuren 1 bis 3).

Statt MetaFrame-Servern können auch Microsoft Terminal-Server zum Einsatz kommen. In diesem Fall ist das Netzwerkprotokoll RDP statt ICA.

Drei Konstellationen sind zu unterscheiden:
1. Es existiert nur ein Standalone-Terminal-Server 4, auf dem das Programmmodul A installiert ist (Figur 1).
2. Es existiert eine Terminal-Server-Farm 4a, wobei das Programmmodul A lediglich auf einem der Farm-Server installiert ist (Figur 2).
3. Das Programmmodul A ist auf einem dedizierten Druckserver 3 installiert (Figur 3).

In jedem dieser drei Fälle empfängt das Programmmodul A einen Druckauftrag von einem LPR. Außerdem wird dem Programmmodul A mitgeteilt, welcher Nutzer den Druckauftrag ausgelöst hat. In einer bevorzugten Ausführungsform ist eine Information über den Nutzer, der den Druckauftrag ausgelöst hat, im Druckauftrag selbst mit enthalten. Mit dieser Information kann das Programmmodul A in den in Figur 2 und 3 dargestellten Konstellationen zunächst ermitteln, auf welchem Terminal-Server 4 die Session des betreffenden Nutzers läuft. Daraufhin sendet es den Druckauftrag zu diesem Terminal-Server; von hier aus leitet das Programmmodul B die Druckdaten vorzugsweise bandbreitenkontrolliert, insbesondere bandbreitenbegrenzt, komprimiert und/oder verschlüsselt an den betreffenden Nutzer weiter (von hier ab wird eines der Protokolle verwendet werden, die es erlauben, den Nutzer zu adressieren: beispielsweise ICA oder RDP).

Eine beispielhafte Ausführungsform der Erfindung nutzt folgende Systemvoraussetzungen zur Nutzung des Programmmoduls A:
- Die SAP-Umgebung ist installiert und konfiguriert. Das betrifft das SAP-System als Anwendungsserver 1, die Terminal-Server 4, den Spool-Server 2 inkl. LPR, ggf. den dedizierten Druckserver 3 und die ICA-Clients auf den Client-Terminals 6.
- Es erweist sich im Hinblick auf die Netzwerksicherheit als praktisch, wenn für Änderungen von Einstellungen auf den Terminal-Servern 4, den dedizierten Druckservern 3 sowie auf dem Spool-Server 2 Administrator-Rechte bzw. Domänen-Administrator-Rechte erforderlich sind.
- In der beispielhaften Ausführungsform ist auf allen Terminal-Servern 4 das Programmmodul B installiert.
- Auf den Terminal-Servern 4 ist weiterhin ein beliebiger, aber freigegebener PCL- oder PostScript-Drucker mit einem virtuellen Druckerport verbunden. Soll das Druckerobjekt für die Nutzer unsichtbar sein, so wird ausschließlich das SYSTEM-Konto freigegeben.
- In der beispielhaften Ausführungsform sind alle Terminal-Server einer Farm 4a identisch konfiguriert.
- Das Programmmodul A kann auf einem dedizierten Druckserver 3 installiert werden, wenn dieser als Standalone-Server ausgeführt ist oder Network Load Balancing (NLB) nutzt. Bei Nutzung der Microsoft Cluster Services wird die Installationsprozedur auf jedem Cluster-Knoten ausgeführt.
- Alle benötigten Drucker und das Programmmodul C sind auf den jeweiligen PCs (Client-Terminal 6) installiert.
- Die Nutzer loggen sich in der beispielhaften Ausführungsform auf dem Anwendungsserver 1 vorzugsweise mit demselben Nutzernamen ein wie auf dem Terminal-Server 4. Und der Anwendungsserver 1 überträgt mit den Druckaufträgen den bei dieser Anmeldung verwendeten Nutzernamen; die Nutzernamen werden dann beispielsweise durch den LPR des Spool-Servers 2 in das "Control File" eingefügt.

Das Programmmodul A wird lediglich auf einem der Terminal-Server 4 oder auf einem dedizierten Druckserver 3 benötigt. Beim kommerziellen Einsatz der Erfindung kann es sich als vorteilhaft erweisen, wenn auf den entsprechenden Terminal-Servern und auf dem dedizierten Druckserver eine Lizenz installiert ist.

Ist der dedizierte Druckserver 3 als Cluster-Server ausgeführt, sieht eine bevorzugte Lösung vor, dass auf jedem Cluster-Knoten eine eigene Lizenz installiert ist.

Es kann sich weiterhin als vorteilhaft erweisen, dass jeder Terminal-Server 4, der vom Programmmodul A bedient wird, mindestens eine Lizenz erhält.

Damit der dedizierte Druckserver 3 beim Einsatz von MetaFrame-Servern der Firma Citrix Systems, Inc., ermitteln kann, auf welchem MetaFrame-Server 4 die Session des Nutzers läuft, für den ein Druckauftrag weiter geleitet werden soll, wird beispielsweise folgende Prozedur ausgeführt:
- Kopieren der Datei MFreg.exe von einem MetaFrame-Server 4. Diese findet sich üblicherweise im Verzeichnis ...\citrix\system32.
- Öffnen der Eingabeaufforderung auf dem dedizierten Druckserver 3, Wechseln in das Verzeichnis, in dem die Datei MFreg.exe abgelegt wurde, und Starten derselben. Hierbei Angabe der IP-Adresse des MetaFrame-Servers 4, auf dem die Sessioninformationen bevorzugt abgefragt werden sollen, als Parameter.

Syntax: MFreg IP-Adresse
Beispiel: MFreg 192.168.130.1

Die Installation des Programmmoduls A (in einer beispielhaften Ausführungsform nur auf einem Terminal-Server 4 erforderlich, vgl. Figuren 1 oder 2) kann z.B. folgendermaßen vorgenommen werden:
1. Kopieren der Programmmodul-A-Datei TPLPDsrv.exe in das vorgesehene Programmverzeichnis, z.B.:
   c:\programme\ThinPrint\LPD
2. Starten der Datei TPLPDsrv.exe aus diesem Verzeichnis von der Eingabeaufforderung wie folgt:
   TPLPDsrv -install
3. Anmeldung mit dem Account des Administrators - vorzugsweise eines Domänen-Administrators der Terminal-Server-Farm 4a -, zweimalige Angabe des Kennwortes, und Bestätigung mit OK.
4. Quittieren des darauf folgenden Hinweises mit OK.

Es wird die Bestätigung erhalten, dass das Programmmodul A als Dienst registriert wurde. Der Start des Dienstes wird erst am Ende seiner Konfiguration vorgenommen.

Der Nutzer, unter dem das Programmmodul A installiert wurde, sollte zumindest auf Cluster-Knoten oder auf Terminal-Servern lokale Administratorrechte haben. Außerdem sollte er ggf. als Citrix-Administrator in der Citrix Management Console eingerichtet sein. Leserecht kann hier ausreichend sein.

Die Konfiguration des Programmmoduls A kann z.B. folgendermaßen vorgenommen werden:
Auf jedem Terminal-Server:
   - Installieren eines beliebigen Druckers, hier als Beispiel des Lexmark Optra, und Freigabe desselben. Der Drucker wird mit einem virtuellen Druckerport vom Typ ICA bzw. RDP verbunden (Virtual-Channel-Protokoll).

Drucker- und Freigabename werden vorteilhafterweise auf allen Terminal-Servern identisch gewählt. Der Drucker sollte die Rechte des Nutzers haben, in dessen Kontext das Programmmodul A läuft.

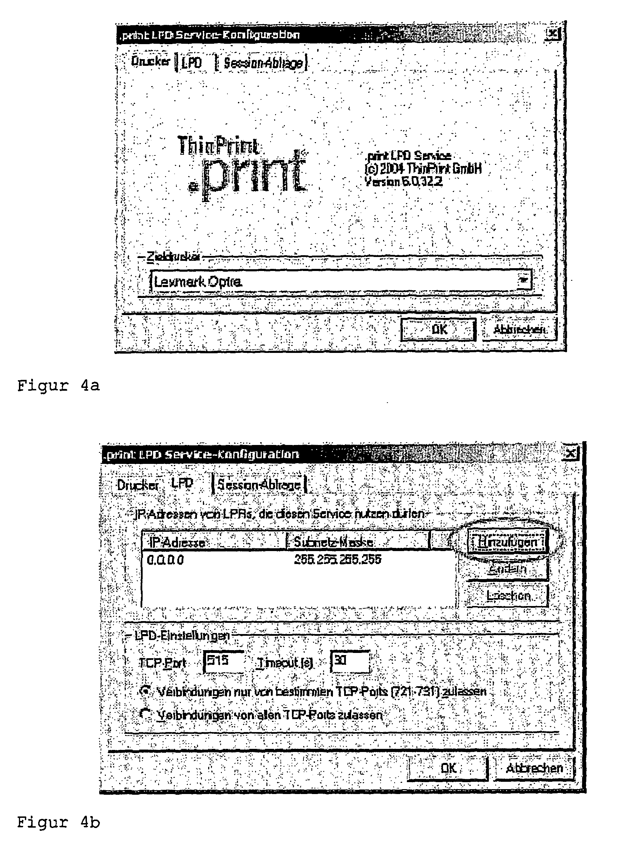

Auf dem Server mit Programmmodul A:
Drucker wählen:
   - Starten des Konfigurationsprogrammes für Programmmodul A aus seinem Installationsverzeichnis:
      z.B. TPLPDsrv -setup
      Das dann erscheinende Konfigurationsmenü ist in Figur 4a dargestellt.
   - Auswählen des Druckers Lexmark Optra als ZIELDRUCKER, oder Eingabe desselben. Diesen nutzt das Programmmodul A zur Weiterleitung der zu druckenden Dateien an Programmmodul B.
Spool-Server wählen:
   Zum Ändern der Einstellungen kann beispielsweise ein Konfigurationsmenü bereitgestellt werden mit einer Registerkarte LPD (vgl. Figur 4b). Die Registerkarte LPD bietet beispielsweise die Möglichkeit, LPR- und LPD-Einstellungen zu wählen. Die wichtigste Einstellung ist die Festlegung der Spool-Server, die Dateien über LPR an Programmmodul A schicken dürfen. Die Standardeinstellung 0.0.0.0 bedeutet, dass noch keine Server spezifiziert sind; diesen Eintrag kann man ändern.

Neue Einträge können beispielsweise über den Button HINZUFÜGEN generiert werden. Es erscheint dann beispielsweise ein Menü zur Eingabe der IP-Adresse und der Subnet Mask beispielsweise des SAP-Servers:
192.168.130.20
255.255.252.0

In einer beispielhaften Ausführungsform können durch Wählen eines Buttons LÖSCHEN einzelne Einträge aus der Liste entfernt werden.

Die LPD- und LPR-Konfiguration erfolgt in einer beispielhaften Ausführungsform folgendermaßen:

### TCP-PORT

Eingabe des TCP-Ports, an dem das Programmmodul A auf eingehende Daten lauschen soll. Standardwert: z.B. 515 (vgl. Figur 4b).

### TIMEOUT

Bestimmung der Zeit mit TIMEOUT, die das Programmmodul A auf eine Antwort vom Spool-Server wartet, bis er von sich aus die Annahme von Daten beendet. Standardwert: z.B. 30 s (vgl. Figur 4b).

### VERBINDUNGEN NUR VON BESTIMMTEN PORTS ZULASSEN

Entscheidung, ob die zu druckenden Dateien nur von LPRs mit den TCP-Portnummern 721 bis 731 oder von beliebigen TCP-Ports gesendet werden dürfen (vgl. Figur 4b).

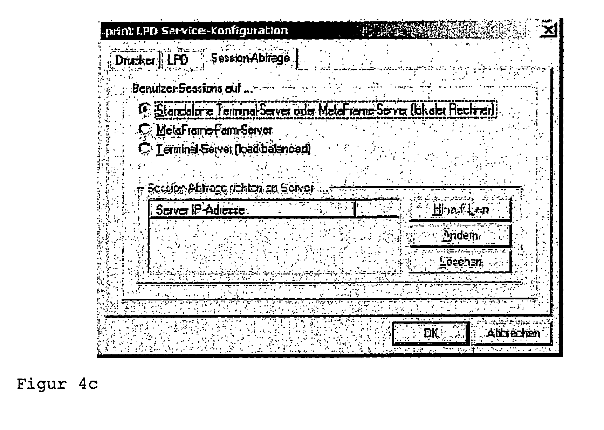

Server für Session-Abfrage festlegen (vgl. Figur 4c):
Das Programmmodul A muss ermitteln, auf welchem Terminal-Server die Session des betreffenden Nutzers läuft. Hierzu sind drei Konstellationen zu unterscheiden. Auf der Registerkarte SESSION-ABFRAGE des beispielshaften Konfigurationsmenüs kann abhängig von der Konstellation konfiguriert werden:
   1. Ist das Programmmodul A installiert auf einem allein stehendem Terminal-Server, erfolgt die Konfiguration in der beispielhaften Ausführungsform durch: "STANDALONE TERMINAL-SERVER ODER METAFRAMESERVER (LOKALER RECHNER)" wählen;
   2. Ist das Programmmodul A installiert auf einem MetaFrame-Farmserver, erfolgt die Konfiguration in der beispielhaften Ausführungsform durch:
      "METAFRAME-FARMSERVER" wählen und als IP-Adresse angeben: 127.0.0.1;
   3. Ist das Programmmodul A installiert auf einem Microsoft-Farmserver, erfolgt die Konfiguration in der beispielhaften Ausführungsform durch:
      "TERMINAL SERVER (LOAD BALANCED)" wählen und als IP-Adresse angeben: 127.0.0.1;
   4. Ist das Programmmodul A installiert auf einem dediziertem Druckserver, erfolgt die Konfiguration in der beispielhaften Ausführungsform durch:
      "METAFRAME-FARMSERVER" bzw. "TERMINAL SERVER (LOAD BALANCED)" wählen und die IP-Adressen von - ggf. alternativen - Terminal-Servern angeben.

Die Angabe von alternativen MetaFrame-Servern kann für den Fall als vorteilhaft erweisen, dass der mit MFreg angegebene, bevorzugte MetaFrame-Server nicht erreichbar ist.

Mit Ausnahme der Konfiguration von Microsoft Server-Clustern wird eine Konfiguration durch drücken des Buttons "OK" abgeschlossen. Damit werden die Einstellungen gespeichert.

Anschließend kann der Dienst des Programmmoduls A im DIENSTE-Ordner von Windows gestartet werden.

Wenn als dedizierter Druckserver ein Microsoft Server-Cluster verwendet wird, wird in einer beispielhaften Ausführungsform die Installationsprozedur auf jedem Cluster-Knoten des Druckservers einzeln durchgeführt. Anschließend wechselt man auf die Cluster-Instanz. Hierzu wird der UNC-Pfad des Clusters angegeben.

Im Anschluss daran werden folgende Schritte ausgeführt:
1. Starten des Cluster-Administrators (CluAdmin.exe).
2. Markieren von CLUSTER GROUP, und Auswahl von FILE_ NEW_ RESOURCE.
3. Angabe eines Namens für die zu installierende Cluster-Ressource, z.B. TPLPD.
4. Auswahl von GENERIC SERVICE und CLUSTER GROUP und anschließend NEXT.
5. Hinzufügen aller Cluster-Knoten mit ADD, auf denen das Programmmodul A installiert wurde, und Klicken von NEXT.
6. Aktivieren der Ressourcen CLUSTER IP ADDRESS und CLUSTER NAME jeweils mit ADD, und Bestätigen mit NEXT.
7. Angabe von TPLPDSrv als Namen des Windows-Dienstes, und mit NEXT fortfahren. Anschließend erscheint das Programmmodul A im Cluster-Administrator.
8. Markieren des Programmmoduls A, und Starten des Dienstes abschließend mit FILE → BRING ONLINE.

Spätere Änderungen mit dem Programmmodul-A-Konfigurationstool werden erst nach einem Neustart des Dienstes wirksam.
1. Man öffnet hierzu den DIENSTE-Ordner von Windows.
2. Neustart des Dienstes.

Auf einem Microsoft Server-Cluster startet man den Cluster-Administrator (CluAdmin.exe) und startet den Dienst TPLPD neu, indem man ihn markiert und wählt:
1. FILE → TAKE OFFLINE und anschließend
2. FILE → BRING ONLINE

Nachfolgend soll der Ablauf beim Drucken detaillierter erläutert werden:
Aus einer Terminal-Session heraus löst ein Nutzer einen Druckauftrag aus (Figur 3). Der Anwendungsserver (1; z.B. ein SAP-Server) sendet den Druckauftrag an den Spool-Server 2. Dieser schickt ihn über LPR an den Server, auf dem das Programmmodul A installiert ist (dedizierter Druckserver 3 bzw. Terminal-Server 4).

Das Programmmodul A ermittelt den Terminal-Server 4, auf dem der Nutzer angemeldet ist. Dann leitet es den Druckauftrag an das auf diesem Terminal-Server installierte Programmmodul B weiter. Dieses sendet die Druckdaten bandbreitenkontrolliert, insbesondere bandbreitenbegrenzt, komprimiert und verschlüsselt über ein WAN, das Internet 5 oder eine andere bandbreitenkritische Verbindung an das Client-Terminal 6 des Nutzers, der aus der Terminal-Session heraus den Druckauftrag ausgelöst hat (Druckprotokoll: ICA oder RDP).

Das Programmmodul C auf dem Client-Terminal 6 dekomprimiert und entschlüsselt die Druckdaten und leitet sie an den Drucker 7 weiter - das kann sowohl der Standarddrucker des Client-Betriebssystems als auch der des Programmmoduls C sein.

Will der Nutzer einen anderen Drucker nutzen, dann wechselt er vor dem Auslösen des Druckauftrages entweder den Standarddrucker des Client-Betriebssystems oder des Programmmoduls C in ganz gewöhnlicher Weise. Für den Nutzer erscheint das Drucken über Anwendungsserver 1 so, als ob er auf seinem ganz normalen Arbeitsplatzdrucker 7 oder lokal installierten Netzwerkdrucker drucken würde, den er auch in ganz gewöhnlicher Weise auf seinem Client-Terminal 6 einrichten kann. Alternativ oder zusätzlich zum Ausdruck des Druckauftrages kann in einer beispielhaften Ausführungsform auch die Druckansicht (visuell) auf dem Bildschirm ausgegeben werden. Auch dies ist mit herkömmlichen Lösungen nicht möglich, da eine auf den Nutzer, der den Druckauftrag ausgelöst hat, abgestimmte Ausgabe der Druckdaten damit nicht möglich ist.

Die Erfindung beschränkt sich in ihrer Ausführungsform nicht auf das vorstehend angegebene bevorzugte Ausführungsbeispiel. Vielmehr ist eine Anzahl von Varianten denkbar, die von der Erfindung auch bei grundsätzlich anders gearteten Ausführungen Gebrauch machen.

### Bezugszeichenliste

- 1: Anwendungsserver
- 2: Spool-Server
- 3: dedizierter Druckserver
- 4: Terminal-Server
- 4a: Terminal-Server-Farm
- 5: Internet
- 6: Client-Terminal
- 7: Arbeitsplatzdrucker, Drucker

### Abkürzungen

- DCOM: Distributed Component Object Model
- GUI: Graphical User Interface
- ICA: Independent Computing Architecture
- IP: Internet Protocol (siehe auch TCP/IP)
- LAN: Local Area Network
- LPD: Line Printer Daemon
- LPR: Line Printer Remote
- MSCS: Microsoft Cluster Services
- NLB: Network Load Balancing
- RDP: Remote Desktop Protocol
- s: Sekunde(n)
- TCP/IP: Transmission Control Protocol over Internet Protocol
- TP: ThinPrint
- UNC: Namenskonvention zum Zugriff auf Netzwerkressourcen unter Microsoft-Betriebssystemen (universal naming convention); Beispiel: \\server\verzeichnis
- VPN: Virtual Private Network
- WAN: Wide Area Network
- WLAN: Wireless Local Area Network

## Patentansprüche

1. Verfahren zum Drucken über Anwendungsserver (1), wobei ein Anwendungsserver (1) vermittels mindestens eines entfernt angeordneten Terminalservers (4) von mindestens einem Client-Terminal (6) bedient wird, wobei ein von einem Nutzer des mindestens einen Client-Terminals (6) aus einer auf einem der mindestens einen Terminalserver (4) laufenden Session heraus ausgelöster, auf dem Anwendungsserver (1) gestarteter Druckauftrag zusammen mit Informationen über den Nutzer, der den Druckauftrag ausgelöst hat, von dem Anwendungsserver (1) an einen der mindestens einen Terminalserver (4) oder einen Druckserver (3) gesendet wird, wobei die Informationen über den Nutzer den Nutzernamen umfassen, mit dem sich der Nutzer auf dem Anwendungsserver (1) eingeloggt hat, und wobei der Druckauftrag zusammen mit den Informationen über den Nutzer von einem auf einem der Terminalserver (4) oder dem Druckserver (3) installierten Programmmodul (A) entgegengenommen wird, welches im Falle des Einsatzes mehrerer Terminalserver (4)
- unter Verwendung der Informationen über den Nutzer den Terminalserver (4) ermittelt, auf dem die Session des Nutzers läuft, und
- wenn der Druckauftrag und die Informationen über den Nutzer an das auf dem einen Terminalserver (4) oder auf dem Druckserver (3) installierte Programmmodul (A) gesendet wird, den Druckauftrag an den Terminal-server (4), auf dem die Session des Nutzers läuft, weiterleitet, nachdem der Nutzer ermittelt wurde,
und in jedem Falle der Druckauftrag anschließend durch einen auf dem Client-Terminal (6) eingerichteten Arbeitsplatzdrucker (7), auf einem lokal auf dem Client-Terminal (6) eingerichteten Netzwerkdrucker ausgedruckt und/oder über eine optische Schnittstelle des Client-Terminals (6) ausgegeben wird.

2. Verfahren nach Anspruch 1,
**dadurch gekennzeichnet, dass**
der auf dem Anwendungsserver (1) gestartete Druckauftrag in die Session des Nutzers, in welcher der Druckauftrag ausgelöst wurde, eingebunden wird.

3. Verfahren nach Anspruch 2,
**dadurch gekennzeichnet, dass**
ein Druckauftrag in die Terminal-Session eines Nutzers eingebunden wird, indem der Druckauftrag in den Druckordner des Nutzers geschrieben wird.

4. Verfahren nach einem der vorangehenden Ansprüche,
**dadurch gekennzeichnet, dass**
der auf dem Anwendungsserver (1) gestartete Druckauftrag durch Vermittlung eines Spool-Servers (2) an den ermittelten Terminalserver (4) geleitet wird.

5. Verfahren nach Anspruch 4,
**dadurch gekennzeichnet, dass**
der Spool-Server (2) den Druckauftrag über Line Printer Remote (LPR) an den ermittelten Terminalserver (4) sendet.

6. Verfahren nach einem der vorangehenden Ansprüche,
**dadurch gekennzeichnet, dass**
eine Übertragung der Druckdaten zumindest von dem Terminalserver (4), auf dem die Session des Nutzers läuft, an das Client-Terminal (6) bandbreitenkontrolliert und/oder komprimiert und/oder verschlüsselt erfolgt.

7. Verfahren nach einem der vorangehenden Ansprüche,
**dadurch gekennzeichnet, dass**
eine Übertragung des Druckauftrags zumindest von dem Terminalserver (4), auf dem die Session des Nutzers läuft, an das Client-Terminal (6) mit dem Protokoll Independent Computing Architecture (ICA-Protokoll) oder dem Remote Desktop Protocol (RDP) erfolgt.

8. Anordnung zum Drucken über Anwendungsserver (1), wobei die Anordnung mindestens einen Anwendungsserver (1), mindestens einen Terminalserver (4) und mindestens ein Client-Terminal (6) umfasst, und der mindestens eine Anwendungsserver (1), der mindestens eine Terminalserver (4) und das mindestens eine Client-Terminal (6) durch Mittel zur Datenübertragung miteinander verbunden sind, wobei der mindestens eine Terminalserver (4) entfernt von dem mindestens einen Anwendungsserver (1) angeordnet ist, und wobei
die Anordnung derart eingerichtet ist, dass ein von einem Nutzer des mindestens einen Client-Terminals (6) aus einer auf einem der mindestens einen Terminalserver (4) laufenden Session heraus ausgelöster, auf dem Anwendungsserver (1) gestarteter Druckauftrag zusammen mit Informationen über den Nutzer, der den Druckauftrag ausgelöst hat, von dem Anwendungsserver (1) an einen der mindestens einen Terminalserver (4) oder einen Druckserver (3) gesendet wird, wobei die Informationen über den Nutzer den Nutzernamen umfassen, mit dem sich der Nutzer auf dem Anwendungsserver (1) eingeloggt hat, und wobei der Druckauftrag zusammen mit den Informationen über den Nutzer von einem auf einem der Terminalserver (4) oder dem Druckserver (3) installierten Programmmodul (A) entgegengenommen wird, welches im Falle des Einsatzes mehrerer Terminalserver (4)
- unter Verwendung der Informationen über den Nutzer den Terminalserver (4) ermittelt, auf dem die Session des Nutzers läuft, und
- wenn der Druckauftrag und die Informationen über den Nutzer an das auf dem einen Terminalserver (4) oder auf dem Druckserver (3) installierte Programmmodul (A) gesendet wird, den Druckauftrag an den Terminalserver (4), auf dem die Session des Nutzers läuft, weiterleitet, nachdem der Nutzer ermittelt wurde,
und in jedem Falle der Druckauftrag anschließend durch einen auf dem Client-Terminal (6) eingerichteten Arbeitsplatzdrucker (7), auf einem lokal auf dem Client-Terminal (6) eingerichteten Netzwerkdrucker ausgedruckt und/oder über eine optische Schnittstelle des Client-Terminals (6) ausgegeben wird.

9. Anordnung nach Anspruch 8,
**dadurch gekennzeichnet, dass**
eine durch die Mittel zur Datenübertragung zwischen dem mindestens einen Anwendungsserver (1) und dem mindestens einen Terminalserver (4) gebildete Kommunikationsverbindung mindestens einen Spool-Server (2) umfasst.

10. Anordnung nach einem der Ansprüche 8 oder 9,
**dadurch gekennzeichnet, dass**
eine durch die Mittel zur Datenübertragung zwischen dem mindestens einen Anwendungsserver (1) und dem mindestens einen Terminalserver (4) gebildete Kommunikationsverbindung mindestens einen dedizierten Druckserver (3) umfasst.

11. Computerprogramm, das es einer Datenverarbeitungseinrichtung ermöglicht, nachdem es in Speichermittel der Datenverarbeitungseinrichtung geladen worden ist, ein Verfahren zum Drucken über Anwendungsserver (1) durchzuführen, wobei ein Anwendungsserver (1) vermittels mindestens eines entfernt angeordneten Terminalservers (4) von mindestens einem Client-Terminal (6) bedient, und ein von einem Nutzer des mindestens einen Client-Terminals (6) aus einer auf einem der mindestens einen Terminalserver (4) laufenden Session heraus ausgelöster, auf dem Anwendungsserver (1) gestarteter Druckauftrag zusammen mit Informationen über den Nutzer, der den Druckauftrag ausgelöst hat, von dem Anwendungsserver (1) an einen der mindestens einen Terminalserver (4) oder einen Druckserver (3) gesendet wird, wobei die Informationen über den Nutzer den Nutzernamen umfassen, mit dem sich der Nutzer auf dem Anwendungsserver (1) eingeloggt hat, und wobei der Druckauftrag zusammen mit den Informationen über den Nutzer von einem auf einem der Terminalserver (4) oder dem Druckserver (3) installierten Programmmodul (A) entgegengenommen wird, welches im Falle des Einsatzes mehrerer Terminalserver (4)
- unter Verwendung der Informationen über den Nutzer den Terminalserver (4) ermittelt, auf dem die Session des Nutzers läuft, und
- wenn der Druckauftrag und die Informationen über den Nutzer an das auf dem einen Terminalserver (4) oder auf dem Druckserver (3) installierte Programmmodul (A) gesendet wird, den Druckauftrag an den Terminalserver (4), auf dem die Session des Nutzers läuft, weiterleitet, nachdem der Nutzer ermittelt wurde,
und in jedem Falle der Druckauftrag anschließend durch einen auf dem Client-Terminal (6) eingerichteten Arbeitsplatzdrucker (7), auf einem lokal auf dem Client-Terminal (6) eingerichteten Netzwerkdrucker ausgedruckt und/oder über eine optische Schnittstelle des Client-Terminals (6) ausgegeben wird.

12. Computerprogramm nach Anspruch 11,
**dadurch gekennzeichnet, dass** das Computerprogramm mehrere Programmmodule umfasst, und mindestens ein Programmmodul auf
- mindestens einem Anwendungsserver (1),
- mindestens einem Terminal-Server (4),
- mindestens einem Client-Terminal (6),
- mindestens einem Spool-Server (2) und/oder
- mindestens einem dedizierten Druckserver (3),
installiert ist.

13. Computerlesbares Speichermedium, auf dem ein Programm gespeichert ist, das es einer Datenverarbeitungseinrichtung ermöglicht, nachdem es in Speichermittel der Datenverarbeitungseinrichtung geladen worden ist, ein Verfahren zum Drucken über Anwendungsserver (1) durchzuführen, wobei ein Anwendungsserver (1) vermittels mindestens eines entfernt angeordneten Terminalservers (4) von mindestens einem Client-Terminal (6) bedient, und ein von einem Nutzer des mindestens einen Client-Terminals (6) aus einer auf einem der mindestens einen Terminalserver (4) laufenden Session heraus ausgelöster, auf dem Anwendungsserver (1) gestarteter Druckauftrag zusammen mit Informationen über den Nutzer, der den Druckauftrag ausgelöst hat, von dem Anwendungsserver (1) an einen der mindestens einen Terminalserver (4) oder einen Druckserver (3) gesendet wird, wobei die Informationen über den Nutzer den Nutzernamen umfassen, mit dem sich der Nutzer auf dem Anwendungsserver (1) eingeloggt hat, und wobei der Druckauftrag zusammen mit den Informationen über den Nutzer von einem auf einem der Terminalserver (4) oder dem Druckserver (3) installierten Programmmodul (A) entgegengenommen wird, welches im Falle des Einsatzes mehrerer Terminalserver (4)
- unter Verwendung der Informationen über den Nutzer den Terminalserver (4) ermittelt, auf dem die Session des Nutzers läuft, und
- wenn der Druckauftrag und die Informationen über den Nutzer an das auf dem einen Terminalserver (4) oder auf dem Druckserver (3) installierte Programmmodul (A) gesendet wird, den Druckauftrag an den Terminalserver (4), auf dem die Session des Nutzers läuft, weiterleitet, nachdem der Nutzer ermittelt wurde,
und in jedem Falle der Druckauftrag anschließend durch einen auf dem Client-Terminal (6) eingerichteten Arbeitsplatzdrucker (7), auf einem lokal auf dem Client-Terminal (6) eingerichteten Netzwerkdrucker ausgedruckt und/oder über eine optische Schnittstelle des Client-Terminals ausgegeben wird.

14. Verfahren, bei dem ein Computerprogramm nach einem der Ansprüche 11 oder 12 aus einem elektronischen Datennetz, wie beispielsweise aus dem Internet, auf eine an das Datennetz angeschlossene Datenverarbeitungseinrichtung heruntergeladen wird.

## Claims

1. Method for printing via application servers (1), wherein an application server (1) is controlled from at least one client terminal (6) via at least one terminal server (4) that is arranged remote from said application server, wherein
a print order initiated by a user of the at least one client terminal (6) during a session running on one of the at least one terminal server(s) (4) and started on the application server (1) is transmitted from the application server (1) to one of the at least one terminal server(s) (4) or to a print server (3), together with information on the user who initiated the print order, wherein said information on the user comprises the user name used by the user to log on the application server (1), and wherein the print order, together with the information on the user, is received by a program module (A) which is installed on one of the terminal servers (4) or on the print server (3) and which, in the event that several terminal servers (4) are used
- identifies the terminal server (4) on which the session of the user runs, using the information on the user, and
- forwards the print order to the terminal server (4) on which the session of the user runs, once the user has been identified, if the print order and the information on the user are transmitted to the program module (A) installed on the one terminal server (4) or on the print server (3),
and in each case, the print order is subsequently printed on a desktop printer (7) installed on the client terminal (6), on a network printer installed locally on the client terminal (6), and/or outputted via an optical interface of the client terminal (6).

2. Method according to claim 1,
**characterized in that**
the print order started on the application server (1) is integrated in the session of the user where the print order was initiated.

3. Method according to claim 2,
**characterized in that**
a print order is integrated in the terminal session of a user by writing the print order to a printer folder of the user.

4. Method according to one of the preceding claims,
**characterized in that**
the print order started on the application server (1) is transferred by means of a spool server (2) to the identified terminal server (4).

5. Method according to claim 4,
**characterized in that**
the spool server (2) transmits the print order via Line Printer Remote (LPR) to the identified terminal server (4).

6. Method according to one of the preceding claims,
**characterized in that**
the print data are transmitted with controlled bandwidth and/or compressed and/or encrypted at least from the terminal server (4), on which the session of the user runs, to the client terminal (6).

7. Method according to one of the preceding claims,
**characterized in that**
the print data are transmitted at least from the terminal server (4), on which the session of the user runs, to the client terminal (6) by using the protocol Independent Computing Architecture (ICA protocol) or the Remote Desktop Protocol (RDP).

8. System for printing via application servers (1), wherein the system includes at least one application server (1), at least one terminal server (4) and at least one client terminal (6), and wherein the at least one application server (1), the at least one terminal server (4) and the at least one client terminal (6) are connected with one another by data transmission means, wherein the at least one terminal server (4) is arranged remote from the at least one application server (1), and wherein the system is set up so that a print order initiated by a user of the at least one client terminal (6) during a session running on one of the at least one terminal server(s) (4) and started on the application server (1) is transmitted from the application server (1) to one of the at least one terminal server(s) (4) or to a print server (3), together with information on the user who initiated the print order, wherein said information on the user comprises the user name used by the user to log on the application server (1), and wherein the print order, together with the information on the user, is received by a program module (A) which is installed on one of the terminal servers (4) or on the print server (3) and which, in the event that several terminal servers (4) are used
- identifies the terminal server (4) on which the session of the user runs, using the information on the user, and
- forwards the print order to the terminal server (4) on which the session of the user runs, once the user has been identified, if the print order and the information on the user are transmitted to the program module (A) installed on the one terminal server (4) or on the print server (3), and in each case, the print order is subsequently printed on a desktop printer (7) installed on the client terminal (6), on a network printer installed locally on the client terminal (6), and/or outputted via an optical interface of the client terminal (6).

9. System according to claim 8,
**characterized in that**
a communication link formed by the data transmission means between the at least one application server (1) and the at least one terminal server (4) comprises at least one spool server (2).

10. System according to one of the claims 8 or 9,
**characterized in that**
a communication link formed by the data transmission means between the at least one application server (1) and the at least one terminal server (4) comprises at least one dedicated print server (3).

11. Computer program which enables a data processing device, after the computer program has been loaded into storage means of the data processing device, to execute a method for printing via application servers (1), wherein an application server (1) is controlled from at least one client terminal (6) via at least one terminal server (4) that is arranged remote from said application server, and wherein a print order initiated by a user of the at least one client terminal (6) during a session running on one of the at least one terminal server(s) (4) and started on the application server (1) is transmitted from the application server (1) to one of the at least one terminal server(s) (4) or to a print server (3), together with information on the user who initiated the print order, wherein said information on the user comprises the user name used by the user to log on the application server (1), and wherein the print order, together with the information on the user, is received by a program module (A) which is installed on one of the terminal servers (4) or on the print server (3) and which, in the event that several terminal servers (4) are used
- identifies the terminal server (4) on which the session of the user runs, using the information on the user, and
- forwards the print order to the terminal server (4) on which the session of the user runs, once the user has been identified, if the print order and the information on the user are transmitted to the program module (A) installed on the one terminal server (4) or on the print server (3),
and in each case, the print order is subsequently printed on a desktop printer (7) installed on the client terminal (6), on a network printer installed locally on the client terminal (6), and/or outputted via an optical interface of the client terminal (6).

12. Computer program according to claim 11,
**characterized in that** the computer program comprises several program modules and that at least one program module is installed on
- at least one application server (1),
- at least one terminal server (4),
- at least one client terminal (6),
- at least one spool server (2) and/or
at least one dedicated print server (3).

13. Computer-readable storage medium, on which a program is stored which enables a data processing device, after the computer program has been loaded into storage means of the data processing device, to execute a method for printing via application servers (1), wherein an application server (1) is controlled from at least one client terminal (6) via at least one terminal server (4) that is arranged remote from said application server, and wherein a print order initiated by a user of the at least one client terminal (6) during a session running on one of the at least one terminal server(s) (4) and started on the application server (1) is transmitted from the application server (1) to one of the at least one terminal server(s) (4) or to a print server (3), together with information on the user who initiated the print order, wherein said information on the user comprises the user name used by the user to log on the application server (1), and wherein the print order, together with the information on the user, is received by a program module (A) which is installed on one of the terminal servers (4) or on the print server (3) and which, in the event that several terminal servers (4) are used
- identifies the terminal server (4) on which the session of the user runs, using the information on the user, and
- forwards the print order to the terminal server (4) on which the session of the user runs, once the user has been identified, if the print order and the information on the user are transmitted to the program module (A) installed on the one terminal server (4) or on the print server (3),
and in each case, the print order is subsequently printed on a desktop printer (7) installed on the client terminal (6), on a network printer installed locally on the client terminal (6), and/or outputted via an optical interface of the client terminal (6).

14. Method, wherein a computer program according to one of the claims 11 or 12 is downloaded from an electronic data network, for example from the Internet, to a data processing system connected to the data network.

## Revendications

1. Procédé pour imprimer par l'intermédiaire d'un serveur d'application (1), un serveur d'application (1) étant commandé à l'aide d'au moins un serveur terminal (4) disposé à distance d'au moins un terminal client (6), moyennant quoi une tâche d'impression déclenchée sur le serveur d'application (1) par un utilisateur de cet au moins un terminal client (6) et lancée à partir d'une session en cours sur l'un des serveurs terminaux (4) au moins au nombre de un, étant envoyée ensemble avec des informations sur l'utilisateur qui a déclenché la tâche d'impression, depuis le serveur d'application (1) à l'attention de l'un de cet au moins un des serveurs terminaux (4) ou d'un serveur d'impression (3), les informations sur l'utilisateur comprenant le nom de l'utilisateur avec lequel l'utilisateur s'est enregistré sur le serveur d'application (1), et la tâche d'impression étant réceptionnée ensemble avec les informations sur l'utilisateur par un module de programme (A) installé sur l'un des serveurs terminaux (4) ou le serveur d'impression (3) lequel module de programme, en cas d'utilisation de plusieurs serveurs terminaux (4)
- détermine le serveur terminal (4) sur lequel tourne la session de l'utilisateur en utilisant les informations sur l'utilisateur, et
- lorsque la tâche d'impression et les informations sur l'utilisateur sont envoyées au module de programme (A) installé sur ce serveur terminal (4) ou le serveur d'impression (3), retransmet la tâche d'impression au serveur terminal (4) sur lequel tourne la session de l'utilisateur, une fois que l'utilisateur a été déterminé,
et la tâche d'impression étant ensuite dans tous les cas imprimée par une imprimante de poste de travail (7) mise en place sur le terminal client (6), sur une imprimante de réseau mise en place localement sur le terminal client (6) et/ou éditée via une interface optique du terminal client (6).

2. Procédé selon la revendication 1, **caractérisé en ce que** la tâche d'impression lancée sur le serveur d'application (1) est intégrée dans la session de l'utilisateur au cours de laquelle la tâche d'impression a été déclenchée.

3. Procédé selon la revendication 2, **caractérisé en ce qu'**une tâche d'impression est intégrée dans la session de terminal d'un utilisateur **en ce que** la tâche d'impression est inscrite dans le dossier d'impression de l'utilisateur.

4. Procédé selon l'une des revendications précédentes, **caractérisé en ce que** la tâche d'impression lancée sur le serveur d'application (1) est transmise par l'intermédiaire d'un serveur de spooling (2) au serveur terminal (4) déterminé.

5. Procédé selon la revendication 4, **caractérisé en ce que** le serveur de spooling (2) envoie la tâche d'impression via Line Printer Remote (LPR) au serveur terminal (4) déterminé.

6. Procédé selon l'une des revendications précédentes, **caractérisé en ce qu'**un transfert des données d'impression s'effectue au moins du serveur terminal (4), sur lequel tourne la session de l'utilisateur, au terminal client (6) de manière régulée en largeur de bande et/ou comprimée et/ou codée.

7. Procédé selon l'une des revendications précédentes, **caractérisé en ce qu'**un transfert de la tâche d'impression s'effectue au moins du serveur terminal (4), sur lequel tourne la session de l'utilisateur, au terminal client (6) avec le protocole Independant Computing Architecture (protocole ICA) ou le Remote Desktop Protocol (RDP).

8. Dispositif pour l'impression par l'intermédiaire d'un serveur d'application (1), le dispositif comprenant au moins un serveur d'application (1), au moins un serveur terminal (4) et au moins un terminal client (6), et cet au moins un serveur d'application (1), cet au moins un serveur terminal (4) et cet au moins un client terminal (6) étant reliés ensemble grâce à des moyens pour le transfert de données, cet au moins un serveur terminal (4) étant disposé de manière éloignée de cet au moins un serveur d'application (1), et moyennant quoi
le dispositif est étudié de manière à ce qu'une tâche d'impression déclenchée sur le serveur d'application (1) par un utilisateur de cet au moins un terminal client (6) et lancée à partir d'une session en cours sur l'un des serveurs terminaux (4) au moins au nombre de un, étant envoyée ensemble avec des informations sur l'utilisateur qui a déclenché la tâche d'impression, depuis le serveur d'application (1) à l'attention de l'un de cet au moins un des serveurs terminaux (4) ou du serveur d'impression (3), les informations sur l'utilisateur comprenant le nom de l'utilisateur avec lequel l'utilisateur s'est enregistré sur le serveur d'application (1), et la tâche d'impression étant réceptionnée ensemble avec les informations sur l'utilisateur par un module de programme (A) installé sur l'un des serveurs terminaux (4) ou le serveur d'impression (3) lequel module de programme, en cas d'utilisation de plusieurs serveurs terminaux (4)
- détermine le serveur terminal (4) sur lequel tourne la session de l'utilisateur en utilisant les informations sur l'utilisateur, et
- lorsque la tâche d'impression et les informations sur l'utilisateur sont envoyées au module de programme (A) installé sur ce serveur terminal (4) ou le serveur d'impression (3), retransmet la tâche d'impression au serveur terminal (4) sur lequel tourne la session de l'utilisateur, une fois que l'utilisateur a été déterminé,
et la tâche d'impression étant ensuite dans tous les cas imprimée par une imprimante de poste de travail (7) mise en place sur le terminal client (6), sur une imprimante de réseau mise en place localement sur le terminal client (6) et/ou éditée via une interface optique du terminal client (6).

9. Dispositif selon la revendication 8, **caractérisé en ce qu'**une liaison de communication formée par des moyens pour le transfert de données entre cet au moins un serveur d'application (1) et cet au moins un serveur terminal (4) comprend au moins un serveur de spooling (2) .

10. Dispositif selon l'une des revendications 8 ou 9, **caractérisé en ce qu'**une liaison de communication formé par des moyens pour le transfert de données entre cet au moins un serveur d'application (1) et cet au moins un serveur terminal (4) comprend au moins un serveur d'impression (3) dédié.

11. Programme informatique permettant à un dispositif de traitement de données, une fois qu'il a été chargé dans des moyens de stockage du dispositif de traitement de données, d'exécuter un procédé pour imprimer via des serveurs d'application (1), moyennant quoi un serveur d'application (1) est commandé à l'aide d'au moins un serveur terminal (4) disposé à distance d'au moins un terminal client (6), et une tâche d'impression déclenchée sur le serveur d'application (1) par un utilisateur de cet au moins un terminal client (6) et lancée à partir d'une session en cours sur l'un des serveurs terminaux (4) au moins au nombre de un, étant envoyée ensemble avec des informations sur l'utilisateur qui a déclenché la tâche d'impression, depuis le serveur d'application (1) à l'attention de l'un de cet au moins un des serveurs terminaux (4) ou d'un serveur d'impression (3), les informations sur l'utilisateur comprenant le nom de l'utilisateur avec lequel l'utilisateur s'est enregistré sur le serveur d'application (1), et la tâche d'impression étant réceptionnée ensemble avec les informations sur l'utilisateur par un module de programme (A) installé sur l'un des serveurs terminaux (4) ou le serveur d'impression (3) lequel module de programme, en cas d'utilisation de plusieurs serveurs terminaux (4)
- détermine le serveur terminal (4) sur lequel tourne la session de l'utilisateur en utilisant les informations sur l'utilisateur, et
- lorsque la tâche d'impression et les informations sur l'utilisateur sont envoyées au module de programme (A) installé sur ce serveur terminal (4) ou le serveur d'impression (3), retransmet la tâche d'impression au serveur terminal (4) sur lequel tourne la session de l'utilisateur, une fois que l'utilisateur a été déterminé,
et la tâche d'impression étant ensuite dans tous les cas imprimée par une imprimante de poste de travail (7) mise en place sur le terminal client (6), sur une imprimante de réseau mise en place localement sur le terminal client (6) et/ou éditée via une interface optique du terminal client (6).

12. Programme informatique selon la revendication 11, **caractérisé en ce que** le programme informatique comprend plusieurs modules de programme, et **en ce qu'**au moins un module de programme est installé sur
- au moins un serveur d'application (1),
- au moins un serveur terminal (4),
- au moins un terminal client (6),
- au moins un serveur de spooling (2) et/ou
- au moins un serveur d'impression dédié (3).

13. Support d'enregistrement lisible par ordinateur, sur lequel un programme est enregistré, lequel permet à un dispositif de traitement de données, une fois qu'il a été chargé dans des moyens d'enregistrement du dispositif de traitement de données, d'exécuter un procédé pour l'impression via des serveurs d'application (1), moyennant quoi un serveur d'application (1) est commandé à l'aide d'au moins un serveur terminal (4) disposé à distance d'au moins un terminal client (6), et une tâche d'impression déclenchée sur le serveur d'application (1) par un utilisateur de cet au moins un terminal client (6) et lancée à partir d'une session en cours sur l'un des un serveurs terminaux (4) au moins au nombre de un, étant envoyée ensemble avec des informations sur l'utilisateur qui a déclenché la tâche d'impression, depuis le serveur d'application (1) à l'attention de l'un de cet au mains un des serveurs terminaux (4) ou d'un serveur d'impression (3), les informations sur l'utilisateur comprenant le nom de l'utilisateur avec lequel l'utilisateur s'est enregistré sur le serveur d'application (1), et la tâche d'impression étant réceptionnée ensemble avec les informations sur l'utilisateur par un module de programme (A) installé sur l'un des serveurs terminaux (4) ou le serveur d'impression (3) lequel module de programme, en cas d'utilisation de plusieurs serveurs de terminaux (4)
- détermine le serveur terminal (4) sur lequel tourne la session de l'utilisateur en utilisant les informations sur l'utilisateur, et
- lorsque la tâche d'impression et les informations sur l'utilisateur sont envoyées au module de programme (A) installé sur ce serveur terminal (4) ou le serveur d'impression (3), retransmet la tâche d'impression au serveur terminal (4) sur lequel tourne la session de l'utilisateur, une fois que l'utilisateur a été déterminé,
et la tâche d'impression étant ensuite dans tous les cas imprimée par une imprimante de poste de travail (7) mise en place sur le terminal client (6), sur une imprimante de réseau mise en place localement sur le terminal client (6) et/ou éditée via une interface optique du terminal client (6).

14. Procédé avec lequel un programme informatique selon l'une des revendications 11 ou 12 est téléchargé à partir d'un réseau de données électroniques tel qu'Internet par exemple, sur un dispositif de traitement de données connecté au réseau de données.
